# EUROPÄISCHE PATENTANMELDUNG

(11) **EP 0 729 905 A1**
(43) Veröffentlichungstag der Anmeldung: **04.09.1996**
(21) Anmeldenummer: 96101486.7
(22) Anmeldetag: 02.02.1996
(51) Int. Cl.: B65G 19/26, B65G 15/44

(54) **Fördermittel und Verwendung desselben**

(30) Priorität: 02.03.1995 CH 587/95
(71) Anmelder: ELPATRONIC AG, CH-6303 Zug (CH)
(72) Erfinder: Baumgartner, Michael, CH-8436 Rekingen (CH)

(57) **Zusammenfassung**

Durch eine 2-Punkt-Befestigung des schwenkbaren Fördernockens (14) eines Fördermittels an dessen Zahnriemen (12) und durch einen Hebel (18) wird bewirkt, dass der Fördernocken bei der Umlenkung des Zahnriemens (12) um ein Rad (13) eine Schwenkbewegung entgegen der Förderbewegung ausführt. Dies ergibt eine geringere Schwingung des Fördermittels und geringere Gefahr der Beschädigung des geförderten Gutes beim Abtauchen des Nockens (14) unter die Förderebene (F).

## Beschreibung

Die Erfindung betrifft ein Fördermittel mit einem über eine Umlenkung verlaufenden Förderelement und mindestens einem daran angeordneten Fördernocken zur Beaufschlagung zu fördernden Gutes. Ferner betrifft die Erfindung die Verwendung des Fördermittels.

Aus dem Dokument US-A-4 697 693 ist z.B. ein Fördermittel der genannten Art bekannt, welches in Figur 1 dargestellt ist, und als Förderelement einen Zahnriemen 2 aufweist, der mit den Zahnrädern 3 zweifach umgelenkt wird. Auf dem Zahnriemen sind Fördernocken 4 befestigt, von denen nur einer dargestellt ist. Solche Fördermittel sind in verschiedenen Abwandlungen bekannt, z.B. mit mehreren Umlenkungen um z.B. 45°, 60° oder 90° oder mit einer Kette als Förderelement. Bei diesen bekannten Fördermitteln entsteht im Bereich der Ketten- oder Zahnrimenumlenkung ein starker Drehimpuls. Dies kann einerseits zu starken Schwingungen des Fördermittels führen und andererseits kann durch die Drehbewegung des Nockens eine Beschädigung des geförderten Gegenstandes erfolgen. Letzters kann es notwendig machen, dass der Antrieb des Fördermittels ungleichmässig angetrieben wird, so dass vor der Umlenkung des jeweiligen Nockens eine Verlangsamung erfolgt, damit der Gegenstand vom Fördermittel abgezogen werden kann, bevor der Nocken eine Beschädigung bewirken kann.

Der Erfindung liegt deshalb die Aufgabe zugrunde, ein Fördermittel zu schaffen, welches diese Nachteile nicht aufweist.

Diese Aufgabe wird bei einem Fördermittel der eingangs genannten Art dadurch gelöst, dass der Fördernocken im Bereich der Umlenkung des Förderelementes eine der Umlenkbewegung überlagerte Bewegung erfährt.

Dies erlaubt grundsätzlich die genannten Probleme zu lösen. Dies insbesonders dann, wenn die überlagerte Bewegung des Fördernockens so ausgestaltet ist, dass sie der Förderrichtung entgegengesetzt ist. Es ergibt sich dadurch eine Reduktion der Schwingungen und im Umlaufbereich kann der Fördernocken die Bahn des zu fördernden Gutes verlassen, ohne dabei eine Drehbewegung auszuführen, die zu einer Beschädigung des Gutes führen könnte. Damit wird ein im wesentlichen gleichmässiger Antrieb möglich. Eine bevorzugte Verwendung des Fördermittels liegt in der Zuführung von Dosenzargen zu einer Schweissmaschine zur Schweissung der Dosenlängsnaht. Das erfindungsgemässe Fördermittel kann aber auch für beliebige andere Förderaufgaben eingesetzt werden.

Im folgenden werden Ausführungsbeispiele anhand der Figuren näher erläutert. Dabei zeigt
Figur 1 ein Fördermittel gemäss Stand der Technik;
Figur 2 ein Ausführungsbeispiel eines Fördernockens bei einem erfindungsgemässen Fördermittel;
Figur 3 verschiedene Bewegungszustände des Fördernockens gemäss Figur 2 bei der Umlenkung;
Figur 4 verschiedene Bewegungsschritte bei der zweiten Umlenkung des Fördernockens;
Figur 5 ein Diagramm der Geschwindigkeit und der Beschleunigung über dem Weg bei einem Fördermittel nach Stand der Technik;
Figur 6 ein Diagramm der Geschwindigkeit und der Beschleunigung über dem Weg bei einem erfindungsgemässen Fördermittel; und
Figur 7 eine weitere Ausführungsform des erfindungsgemässen Fördermittels.

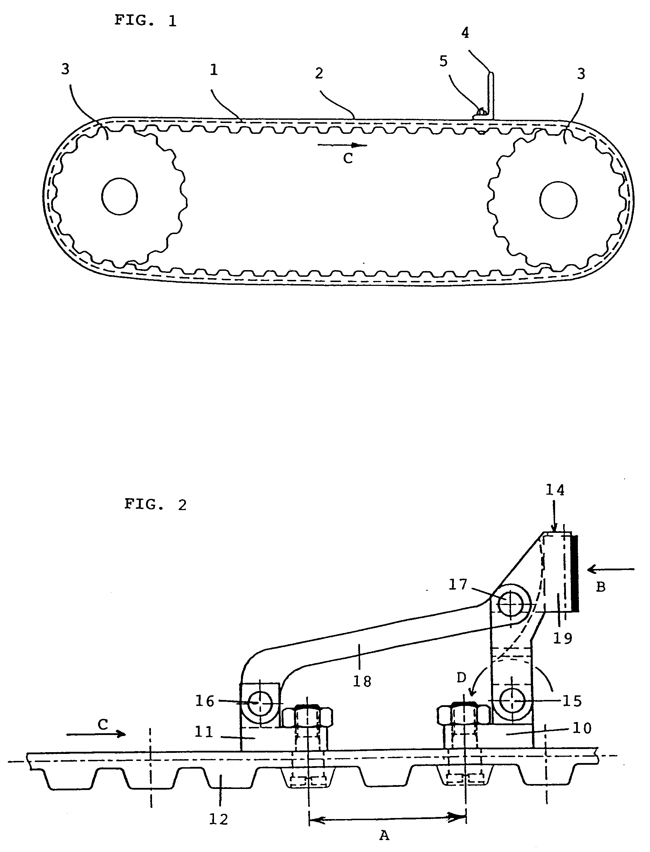

Figur 1 zeigt das erwähnte Fördermittel gemäss Stand der Technik mit dem im wesentlichen starr am Zahnriemen 2 befestigten Nocken 4.

Figur 2 zeigt ein Ausführungsbeispiel gemäss der Erfindung. Am Zahnriemen 12 ist ein erster Fuss 10 des Nockens 14 befestigt. Am Fuss 10 ist um eine erste Schwenkachse 15 drehbar der Nockenkörper 19 angeordnet. Bei geradliniger Bewegung des Zahnriemens ist der Nockenkörper 19 im wesentlichen starr am Zahnriemen angeordnet und durch eine Kraft B nicht verschwenkbar, da der Nockenkörper 15 über einen Hebel 18, der am Nockenkörper mittels einer Schwenkachse 17 angeordnet ist, an einem zweiten Fuss 11 am Zahnriemen 12 befestigt ist (im Abstand A vom ersten Fuss). Der Hebel 18 ist am Fuss 11 ebenfalls schwenkbar mittels der Schwenkachse 16 gehalten. Bei der Förderung eines Gutes entlang dem geradlinigen Abschnitt des Zahnriemens 12 verhält sich der Fördernocken 14 gleich wie der Nocken nach Stand der Technik.

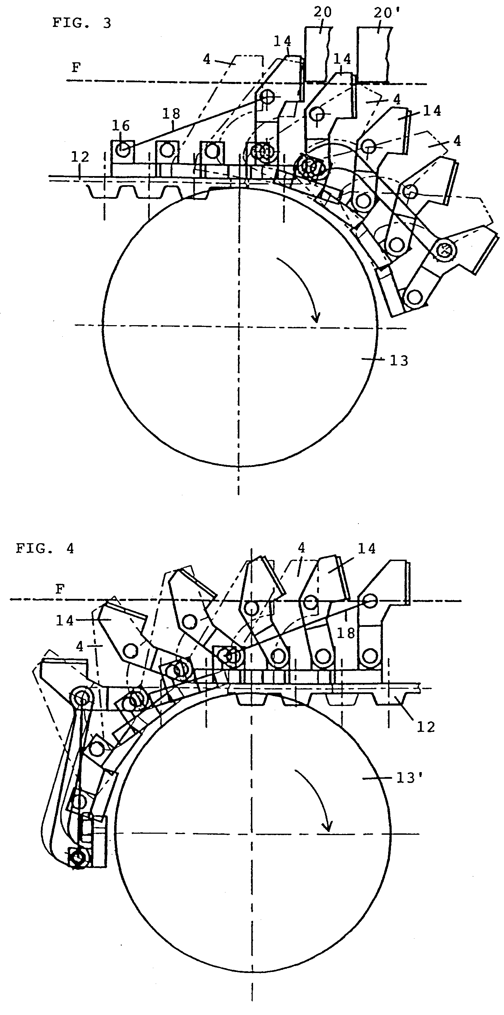

Bei der Umlenkung des Zahnriemens 12 hingegen, ergibt sich ein Zurückschwenken in Pfeilrichtung D, da durch die Umlenkung der Abstand zwischen den Schwenkachsen 16 und 17 grösser würde, was indes durch den Hebel 18 verhindert wird, der somit eine Drehung des Nockenkörpers 19 um die Achse 15 in Gegenrichtung zur Förderbewegung bewirkt. Figur 3 zeigt fünf verschiedene Stellungen des Nockens 14 bei der Umlenkung des Zahnriemens 12 um das Rad 13. Zum Vergleich mit dem Stand der Technik ist ein herkömmlicher Nocken 4 gestrichelt ebenfalls eingezeichnet. Es ist ersichtlich, wie die durch den Hebel 18 bewirkte Drehbewegung des Nockens 14 entgegen der Umlenkbewegung ein Abtauchen des Nockens 14 unter die Förderebene F derart bewirkt, dass keine Drehbewegung des Nockens zum geförderten Gegenstand (der in den Stellungen 20 und 20' angedeutet ist) hin erfolgt, was eine Beschädigung des Gegenstandes durch einen in den Gegenstand (z.B. eine Dosenzarge aus Blech) hineindrehenden Nocken sicher verhindert. Dadurch ist es nicht mehr nötig, den Antrieb des Fördermittels ungleichmässig laufen zu lassen, sondern es kann ein gleichmässiges Antreiben erfolgen.

Die gezeigte Drehbewegung ergibt ferner deutlich geringere Schwingungen des Fördermittels, was andererseits auch eine Erhöhung der Umlaufgeschwindigkeit bzw. eine Erhöhung des Fördertaktes ermöglicht. Bei gleichbleibender Umlaufgeschwindigkeit ergibt sich durch die verminderten Schwingungen eine geringere Belastung des Fördermittels. Eine kleinere Riemen- oder Kettenbelastung ergibt sich ferner durch-die 2-Punkt-Befestigung des Nockens 14.

Figur 4 zeigt verschiedene Stellungen des Fördernockens 14 beim Einfahren in die Förderebene F bzw. bei der Umlenkung um das zweite Rad 13'.

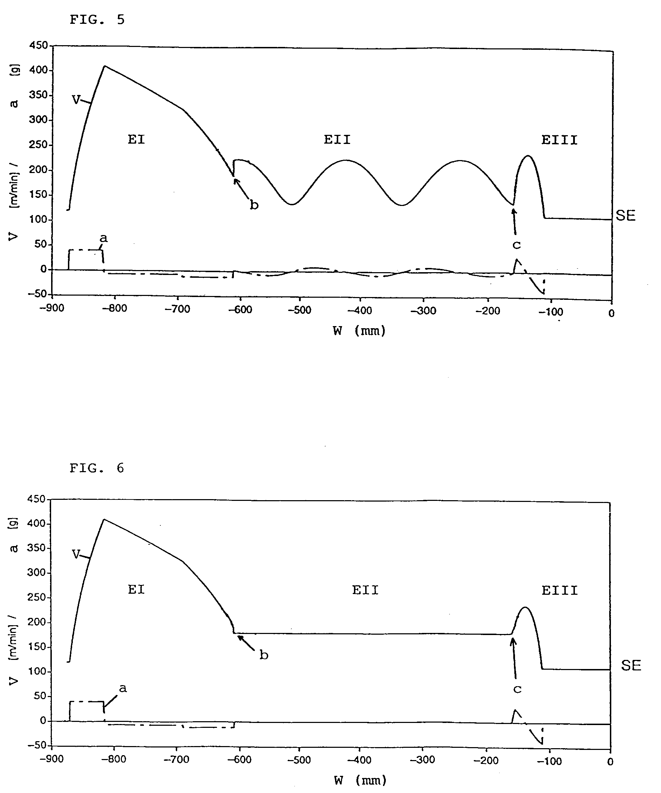

Figur 5 zeigt schematisch die Geschwindigkeit V und die Beschleunigung a einer 110 mm hohen Dosenzarge in drei aufeinanderfolgenden Fördermitteln einer Dosenschweissmaschine über dem Förderweg W. EI ist dabei eine erste bekannte Einschubeinrichtung im Bereich des Rundapparates und EIII eine bekannte Einschubeinrichtung im Bereich des Kalibrierwerkzeuges, welche hier nicht näher zu betrachten sind. Mit EII ist ein Fördermittel mit starren Nocken bezeichnet, wie es vorstehend als Stand der Technik beschrieben worden ist. An den Stellen b bzw. c im Diagramm erfolgt die Uebergabe von EI zu EII bzw. von EII zu EIII. Wie ersichtlich ist, hat die Dosenzarge im Bereich von EII eine schwankende Geschwindigkeit aufgrund des entsprechend gesteuerten Antriebs des Fördermittels EII gemäss Stand der Technik, da die Geschwindigkeit an der Uebergabestelle c jeweils geringer sein muss. Mit SE ist die Schweissebene bezeichnet.

Figur 6 zeigt dahingegen die Verhältnisse mit dem Ausführungsbeispiel gemäss der Erfindung. Die nun mögliche gleichmässige Geschwindigkeit bzw. geringere Beschleunigungsvariation im Bereich EII sind deutlich ersichtlich. Dies führt zu einer entsprechenden Vereinfachung des Antriebs des Fördermittels.

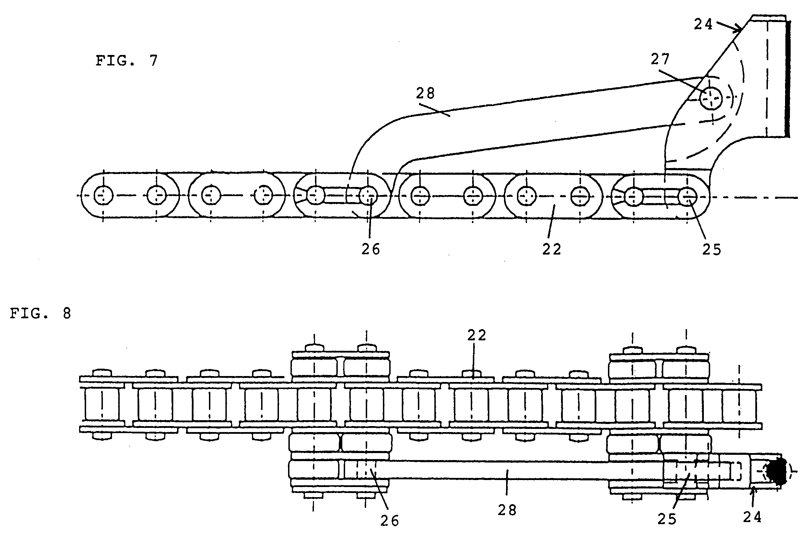

Figur 8 zeigt ein Ausführungsbeispiel mit einer Kette als Förderelement, wobei die um den Betrag 10 erhöhten Bezugszeichen gleiche Elemente bezeichnen wie beim vorhergehenden Beispiel.

Ein anderer Bewegungsablauf ergibt sich, wenn der Hebel 18 oder 28 in Richtung der Riemen- oder Kettenbewegung nach vorne angeordnet ist, so dass also der Fuss 11 im Beispiel von Figur 2 vor dem Fuss 10 befestigt wäre. Dadurch erfolgt die überlagerte Schwenkbewegung des Nockens 14 in entgegengesetzter Richtung als geschildert. Dadurch werden zwar die geschilderten Vorteile des Schwingungsarmut und des parallelen Abtauchens des Nockens nicht erzielt, es kann aber Anwendungen geben, bei denen das schnellere und frühere Abtauchen des Nockens im Vergleich zum Nocken nach Stand der Technik, welches durch den nach vorne gerichteten Hebel 18, 28 bewirkt werden kann, als vorteilhaft anzusehen ist.

Besonders bei der Anwendung des erfindungsgemässen Fördermittels bei der Förderung von Dosenzargen zu einer Zargenschweissmaschine ergeben sich Vorteile: reduzierte Dosenverzögerung, weniger Verschleiss in den Z-Schiene und Führungswerkzeugen.

## Patentansprüche

1. Fördermittel mit einem über eine Umlenkung (13,13') verlaufenden Förderelement (12,22) und mindestens einem daran angeordneten Fördernocken (14,24) zur Beaufschlagung zu fördernden Gutes, dadurch gekennzeichnet, dass der Fördernocken (14,24) derart am Förderelement angeordnet ist, dass der Fördernocken im Bereich der Umlenkung des Förderelementes eine der Umlenkbewegung überlagerte Bewegung erfährt.

2. Fördermittel nach Anspruch 1, dadurch gekennzeichnet, dass die überlagerte Bewegung des Fördernockens bei der Umlenkung des Förderelementes von geradliniger zu gekrümmter Bahn der Förderrichtung entgegengesetzt ist.

3. Fördermittel nach Anspruch 1, dadurch gekennzeichnet, dass die überlagerte Bewegung des Fördernockens bei der Umlenkung des Förderelementes von geradliniger zu gekrümmter Bahn der Förderrichtung entspricht.

4. Fördermittel nach einem der Ansprüche 1 bis 3, dadurch gekennzeichnet, dass der Fördernocken an einer ersten Stelle (10,25) des Förderelementes schwenkbar an diesem gehalten ist und mittels eines Schwenkhebels (18, 28) an einer zweiten Stelle (11, 26) des Förderelementes an diesem angelenkt ist.

5. Fördermittel nach Anspruch 2 und 4, dadurch gekennzeichnet, dass sich der Schwenkhebel (18, 28)des Fördernockens von der ersten Stelle zu einer in Förderrichtung hinter der ersten Stelle liegenden zweiten Stelle erstreckt.

6. Fördermittel nach einem der Ansprüche 1 bis 5, dadurch gekennzeichnet, dass dieses einen im wesentlichen gleichförmig laufenden Antrieb aufweist.

7. Verwendung des Fördermittels nach einem der Ansprüche 1 bis 6 zum Zuführen von Dosenzargen zu einer Rollnahtschweissmaschine.
